# FASCICULE DE BREVET EUROPEEN

(11) **EP 3 932 733 B1**
(45) Date de publication et mention de la délivrance du brevet: **19.02.2025**
(21) Numéro de dépôt: 21182900.7
(22) Date de dépôt: 30.06.2021
(51) Int. Cl.: B60N 2/68, B60N 2/427

(54) **ELÉMENT DE CONNEXION D'UN SIÈGE DE VÉHICULE**
VERBINDUNGSELEMENT EINES FAHRZEUGSITZES
ELEMENT FOR CONNECTING A MOTOR VEHICLE SEAT

(30) Priorité: 30.06.2020 FR 2006862
(43) Date de publication de la demande: 05.01.2022
(73) Titulaire: FAURECIA Sièges d'Automobile, 92000 Nanterre (FR)
(72) Inventeur: DENIS, Bernard, 91760 ITTEVILLE (FR); SERRA, Sabrina, 91430 IGNY (FR); NARISON, Larry, 92000 NANTERRE (FR); HENNEQUART, Gabrielle, 92160 ANTONY (FR)
(74) Mandataire: Lavoix

(56) Documents cités:
- DE-A1- 102008 006 549
- JP-A- 2006 213 201
- US-B2- 8 967 663

## Description

La présente invention concerne un élément de connexion d'un siège de véhicule selon le préambule de la revendication 1.

US 8 967 663 B2 divulgue un élément de connexion d'un siège de véhicule.

DE 10 2008 006549 A1 divulgue un support de dossier.

Un élément de connexion d'un siège de véhicule, également connu sous le terme de gousset de connexion d'une assise à un dossier du siège, peut comprendre un dispositif de dissipation d'énergie en cas de choc sur le véhicule agencé pour absorber une partie de l'énergie due au choc afin de protéger l'occupant du siège.

Un tel dispositif de dissipation est par exemple constitué d'une fente traversante.

En cas de choc, en particulier frontal, du véhicule, la force s'exerçant sur le siège peut être telle qu'elle entraine une déformation de l'élément de connexion. Le dispositif de dissipation permet alors une déformation spécifique contrôlée de l'élément de connexion ce qui permet d'absorber au moins une partie de l'énergie du choc. Pour dissiper l'énergie, la fente se déforme, par exemple, en se refermant.

Néanmoins, un tel dispositif de dissipation est difficilement adaptable a des situations variées. Par exemple, une adaptation à des types de chocs différents, des types de sièges différents, des profils d'occupants différents peuvent être nécessaires.

L'un des buts de l'invention est de proposer un élément de connexion proposant une plus grande adaptabilité aux chocs qu'il peut subir, au siège sur lequel il est installé et au profil du passager qui occupe ledit siège.

A cet effet, l'invention concerne un élément de connexion du type précité et selon la partie caractérisante de la revendication 1.

Ainsi, le premier pontet permet d'obtenir des performances de dissipation améliorée et une plus grande adaptabilité. Les dimensions et la géométrie du premier pontet, notamment son rayon de courbure, peuvent être modifiées pour être adaptées à différents types de chocs, différents types de sièges et différents profils de passager occupant le siège.

En variante, l'élément de connexion est selon l'une quelconque des revendications 2 à 14.

L'invention concerne également un siège de véhicule selon la revendication 15.

D'autres aspects et avantages de l'invention apparaîtront à la lecture de la description qui suit, donnée à titre d'exemple et faite en référence aux dessins annexés, dans lesquels :
- la Fig. 1 est une représentation schématique de côté d'un élément de connexion d'un siège, selon un premier mode de réalisation de l'invention,
- la Fig. 2 est une représentation schématique en perspective de l'élément de connexion de la Fig. 1,
- la Fig. 3 est une représentation schématique de côté de l'élément de connexion de la Fig. 1 intégré dans un siège de véhicule,
- la Fig. 4 est une représentation schématique de côté d'un élément de connexion d'un siège, selon un deuxième mode de réalisation de l'invention.

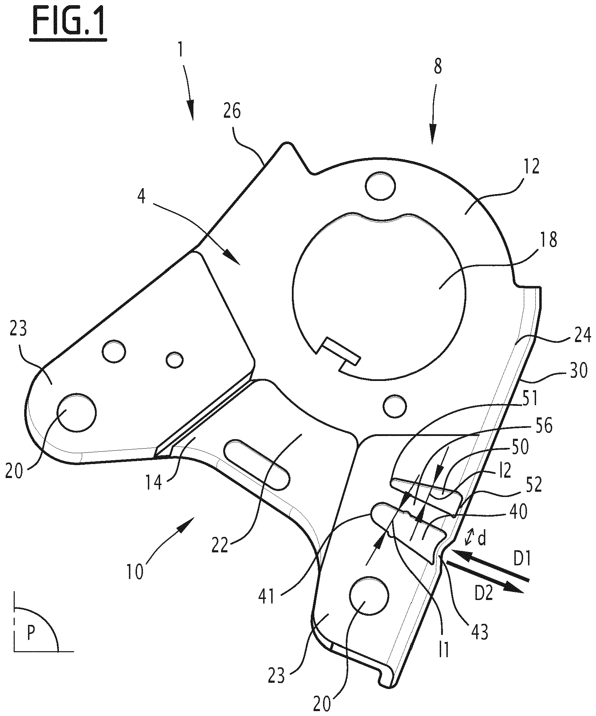

En référence à la Fig. 1, on décrit un élément de connexion 1 d'un siège de véhicule. Un tel élément de connexion 1 est également connu sous le terme de gousset.

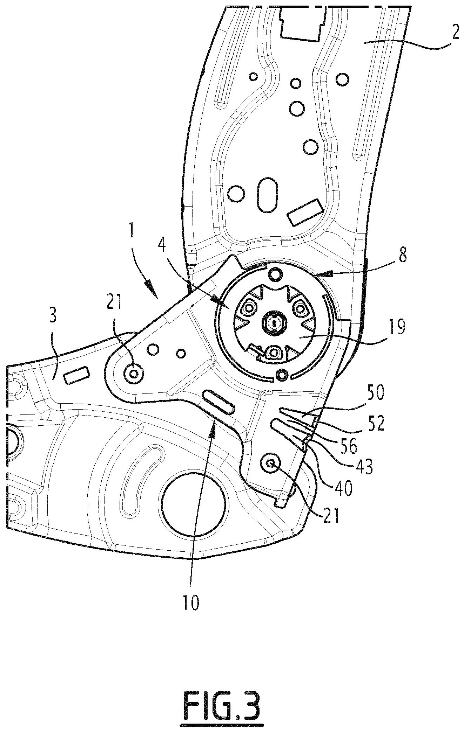

L'élément de connexion 1 est configuré pour solidariser un dossier 2 et une assise 3 du siège comme illustré sur la Fig. 3, tout en permettant un mouvement relatif en rotation entre le dossier 2 et l'assise 3.

L'élément de connexion 1 comprend un corps 4 s'étendant entre une première partie 8 et une deuxième partie 10. La première partie 8 est, par exemple située à une extrémité du corps 4. La deuxième partie 10 est, par exemple, située à une extrémité opposée du corps 4.

En référence aux Fig. 1 à 4, la première partie 8 et la deuxième partie 10 comprennent, par exemple, respectivement un premier support de solidarisation 12 et un deuxième support de solidarisation 14.

Le premier support de solidarisation 12 et le deuxième support de solidarisation 14 sont, par exemple, des supports sur lesquels le dossier 2 et l'assise 3 du siège sont destinés à être fixés et/ou montés mobiles en rotation.

Lorsque le dossier et/ou l'assise sont destinés à être montés en rotation sur l'élément de connexion 1, le premier support de solidarisation 12 et/ou le deuxième support de solidarisation 14 définissent, par exemple, respectivement au moins une cavité de pivot 18 destinée à recevoir au moins une liaison pivot 19 entre le dossier 2 et l'élément de connexion 1 et/ou entre l'assise 3 et l'élément de connexion 1.

La liaison pivot 18 est, par exemple, une articulation du dossier ou de l'assise.

Lorsque le dossier 2 et/ou l'assise 3 sont destinés à être fixés sur l'élément de connexion 1, le premier support de solidarisation 12 et le deuxième support de solidarisation 14 définissent, par exemple, respectivement au moins une cavité de fixation 20 destinée à recevoir au moins un élément de fixation 21 entre le dossier 2 et l'élément de connexion 1 et/ou entre l'assise 3 et l'élément de connexion 1.

L'élément de fixation 21 est, par exemple, une vis ou un rivet.

En référence aux Fig. 1 à 4, le premier support de solidarisation 12 de la première partie 8 définit une cavité de pivot 18 et le deuxième support de solidarisation 14 de la deuxième partie 10 définit une pluralité de cavités de fixation 20.

Le deuxième support de solidarisation 14 comprend une base 22 de liaison au premier support de solidarisation 12 et deux bras 23 s'étendant depuis la base 22 vers une direction opposée au premier support de solidarisation 12.

Le corps 4 s'étend sensiblement selon un plan P. Le corps 4 définit un premier bord 24 et un deuxième bord 26 s'étendant entre la première partie 8 et la deuxième partie 10 de part et d'autre du corps 4. Le deuxième bord 26 est, par exemple, opposé au premier bord 24.

Les premier et deuxième bords 24 et 26 définissent les bords du premier et du deuxième support de solidarisation 12, 14 et s'étendent depuis une première extrémité de la première partie 8 vers une deuxième extrémité de la deuxième partie 10 en particulier des bras 23.

L'élément de connexion 1 comprend, en outre, un épaulement 30 s'étendant sensiblement perpendiculairement par rapport au plan P le long d'au moins l'un du premier bord et du deuxième bords 24, 26 vers une extrémité libre de l'épaulement 30.

En référence aux Fig. 1 à 4, un épaulement 30 s'étend le long de chacun des premier et deuxième bords 24 et 26.

Le corps 4 définit au moins une première fente traversante 40.

La première fente traversante 40 s'étend longitudinalement selon une première direction D1 depuis le premier bord 24. La première fente traversante 40 s'étend, par exemple, vers le deuxième bord 26 du corps 4. La première fente traversante 40 définit une première extrémité intérieure 41 jusqu'à laquelle elle s'étend depuis le premier bord 24.

En référence aux Fig. 1 à 4, la première fente traversante 40 s'étend entre la cavité de pivot 18 de la première partie 8 et une cavité de fixation 20 de la deuxième partie 10.

La première extrémité intérieure 41 de la première fente traversante 40 présente, par exemple, une forme arrondie.

L'élément de connexion 1 comprend, en outre, un premier pontet 43 s'étendant le long d'au moins une partie du premier bord 24 en regard de la première fente 40. Le premier pontet 43 ferme la première fente traversante 40. Le premier pontet 43 constitue une extrémité de la première fente traversante 40 opposée à la première extrémité intérieure 41. En d'autres termes, la première fente traversante 40 est délimitée par le corps 4 et par le premier pontet 43.

En référence aux Fig. 1 à 4, le premier pontet 43 est formé par une partie de l'épaulement 30.

Comme illustré sur les Fig. 1 à 4, le premier pontet 43 est, par exemple, venu de matière avec l'épaulement 30.

Le premier pontet 43 présente, par exemple, une forme incurvée. Cette forme incurvée présente une concavité.

La concavité du premier pontet 43 est, par exemple, dirigée selon une deuxième direction D2 opposée à la première direction D1, c'est-à-dire qu'elle est tournée vers l'extérieur du corps 4.

Le corps 4 définit, par exemple, une deuxième fente traversante 50.

La deuxième fente traversante 50 s'étend depuis le premier bord 24 du corps 4. La deuxième fente traversante 50 définit une deuxième extrémité intérieure 51 jusqu'à laquelle elle s'étend depuis le premier bord 24. La deuxième fente traversante 50 s'étend, par exemple, sensiblement parallèlement à la première direction D1. La deuxième fente traversante 50 s'étend, par exemple, vers le deuxième bord 26 du corps 4.

Le corps 4 comprend une bande de matériau 56 s'étendant entre la première fente traversante 40 et la deuxième fente traversante 50.

La bande de matériau 56 présente une largeur de bande d, mesurée le long du premier bord 24, comprise entre 1 mm et 10 mm, de préférence entre 3 mm et 5 mm.

La largeur de bande d représente donc également la distance entre la première fente traversante 40 et la deuxième fente traversante 50, le long du premier bord 24.

La largeur de bande d est, par exemple, variable le long de la bande de matériau 56 selon la direction D1.

La deuxième extrémité intérieure 51 de la deuxième fente traversante 50 présente, par exemple, une forme arrondie.

Selon un premier mode de réalisation illustré sur les Fig. 1 à 3, l'élément de connexion 1 comprend, en outre, un deuxième pontet 52 s'étendant le long d'au moins une partie du premier bord 24 en regard de la deuxième fente 50. Le deuxième pontet 52 ferme la deuxième fente traversante 50. Le deuxième pontet 52 constitue une extrémité de la deuxième fente traversante 50 opposée à la deuxième extrémité intérieure 51. En d'autres termes, la deuxième fente traversante 50 est délimitée par le corps 4 et par le deuxième pontet 52.

En référence aux Fig. 1 à 3, le deuxième pontet 52 est formé par une partie de l'épaulement 30.

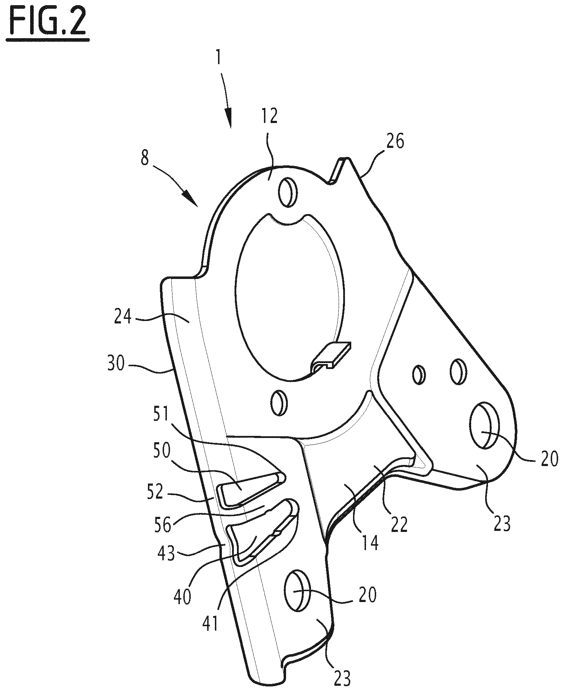

Comme illustré sur la Fig. 2, le deuxième pontet 52 est, par exemple, venu de matière avec l'épaulement 30.

Le deuxième pontet 52 présente, par exemple, une forme rectiligne, c'est-à-dire qu'elle n'est pas incurvée comme le premier pontet 43.

Chacune des première et deuxième fentes traversantes 40, 50 présente une longueur mesurée selon la première direction D1. Chaque longueur de fente est, par exemple, comprise entre 5 mm et 30 mm, de préférence entre 10 mm et 20 mm.

Chacune des première et deuxième fentes traversantes 40, 50 présente une largeur de fente l1, l2, mesurée selon une direction perpendiculaire à la première direction D1. Chaque largeur de fente l1, l2 est, par exemple, comprise entre 1 mm et 20 mm. La largeur de fente l1, l2 est, le long du premier bord 24, par exemple comprise entre 10 mm et 20 mm.

Comme illustré sur les Fig. 1 à 4, la largeur de fente l2 moyenne de la deuxième fente traversante 50 est, par exemple, inférieure à la largeur de fente l1 moyenne de la première fente traversante 40.

Comme illustré sur les Fig. 1 à 4, la largeur de fente l2 de la deuxième fente traversante 50, prise le long du premier bord 24 est, par exemple, inférieure à la largeur de fente l1 de la première fente traversante 40.

Au moins l'une entre la première fente traversante 40 et la deuxième fente traversante 50 présente une forme évasée depuis respectivement la première extrémité intérieure 41 et/ou la deuxième extrémité intérieure 51 vers le premier bord 24. En d'autres termes, la largeur de fente l1, l2 d'au moins l'une entre la première fente traversante 40 et la deuxième fente traversante 50 augmente depuis l'extrémité intérieure 41, 51 vers le premier bord 24.

En référence aux Fig. 1 à 4, la première fente traversante 40 et la deuxième fente traversante 50 présentent, par exemple, une telle forme évasée.

Comme illustré sur les Fig. 1 à 4, la distance entre la première fente traversante 40 et la deuxième partie 10 mesurée le long du premier bord 24 est inférieure à la distance entre la deuxième fente traversante 50 et la deuxième partie 10 mesurée le long du premier bord 24.

Selon une variante, la distance entre la première fente traversante 40 et la deuxième partie 10 mesurée le long du premier bord 24 est supérieure à la distance entre la deuxième fente traversante 50 et la deuxième partie 10 mesurée le long du premier bord 24.

Dans ce qui suit, on décrit le fonctionnement de l'élément de connexion 1 en utilisation dans un siège.

Un dossier 2 du siège est fixé ou monté en rotation sur le premier support de solidarisation 12 ou le deuxième support de solidarisation 14. En référence à la Fig. 3, le dossier du siège est, par exemple, monté en rotation sur le premier support de solidarisation 12.

Une assise 3 du siège est fixée ou montée en rotation sur le premier support de solidarisation 12 ou le deuxième support de solidarisation 14. En référence à la Fig. 3, l'assise 3 du siège est, par exemple, fixée sur le deuxième support de solidarisation 14.

En référence aux Fig. 1 à 4, le premier bord 24 correspond à un bord arrière de l'élément de connexion 1 s'étendant vers l'arrière du siège et le deuxième bord 26 correspond à un bord avant de l'élément de connexion 1 s'étendant vers l'avant du siège. Dans le cas d'un siège tourné vers l'avant du véhicule, le bord arrière est le bord éloigné de la surface d'appui sur lequel prend appui un occupant du siège en comparaison au bord avant qui est le bord proche de la surface d'appui. Dans le cas d'un siège tourné vers l'arrière du véhicule, le bord arrière est le bord proche de la surface d'appui et le bord avant et le bord éloigné de la surface d'appui.

En cas de choc sur le véhicule, lorsqu'une force d'impact supérieure à une force prédéterminée s'applique sur le siège, l'élément de connexion 1 est déformé de sorte à dissiper l'énergie du choc. L'élément de connexion 1 dissipe ainsi au moins une partie de l'énergie due au choc par déformation.

Par exemple, en cas de choc sur le véhicule, lorsqu'une force d'impact supérieure à une force prédéterminée s'applique sur le siège, une compression ou une traction peut être induite le long des premier et deuxième bords 24, 26 sur l'élément de connexion 1.

La première fente traversante 40 et la deuxième fente traversante 50 étant des évidements s'étendant dans le corps 4 de l'élément de connexion 1, elles représentent des zones de déformation favorisées en cas d'application d'une force sur l'élément de connexion 1.

En particulier, les longueurs des première et deuxième fentes traversantes 40, 50 ainsi que leur forme évasée favorisent la diminution ou l'agrandissement de leur largeur de fente l1, l2 lorsqu'une force d'impact est appliquée sur l'élément de connexion 1.

En particulier, en référence aux Fig. 1 à 4, lorsqu'un choc, notamment un choc arrière, a lieu sur le véhicule et lorsqu'une force d'impact est appliquée sur le siège, l'élément de connexion 1 est déformé de sorte que la largeur de fente l1, l2 d'au moins l'une entre la première fente traversante 40 et la deuxième fente traversante 50 est diminuée.

Lorsqu'un choc avant a lieu sur le véhicule, l'élément de connexion 1 est déformé de sorte que la largeur de fente l1, l2 d'au moins l'une de la première fente traversante 40 et de la deuxième fente traversante 50 est augmentée. Les longueurs des première et/ou deuxième fentes traversantes 40, 50 peuvent également être augmentées dans ce cas de figure.

Selon le premier mode de réalisation illustré sur les Fig. 1 à 3, contrairement au premier pontet 43 qui présente une forme curviligne, le deuxième pontet 52 présente une forme rectiligne. Ainsi, le deuxième pontet 52 est plus résistant à une compression ou une traction résultante de la force d'impact et dirigée le long du premier bord 24. Ainsi, la deuxième fente traversante 50 est plus résistante à une compression ou une traction résultante de la force d'impact. Ainsi, avantageusement, lorsqu'une force d'impact s'applique sur lie siège, l'élément de connexion 1 est déformé de sorte que la largeur de fente l1 de la première fente traversante 40 est diminuée dans un premier temps, puis la largeur de fente l2 de la deuxième fente traversante 50 est diminuée dans un deuxième temps.

Le premier pontet 43 et le deuxième pontet 52 sont donc des éléments permettant d'augmenter la résistance à la déformation de la première et de la deuxième fentes traversantes 40, 50. En outre, lorsque l'élément de connexion 1 est déformé, les premier et deuxième pontets 43, 52 se plient en absorbant au moins une partie de l'énergie du choc.

La forme incurvée du premier pontet 43 permet de moduler la résistance à la déformation de la première fente traversante 40. Ainsi, plus la courbure du premier pontet 43 est importante moins la résistance à la déformation de la première fente traversante 40 est grande.

La modulation des longueurs et largeurs de fente des première et deuxième fentes traversantes 40, 50, de la largeur de la bande de matériau 56, de la géométrie du premier pontet 43, notamment de la courbure du premier pontet 43 ainsi que de la géométrie du deuxième pontet 52 permettent de modifier la réponse en déformation de l'élément de connexion 1 pour l'adapter, par exemple, à différentes forces d'impact, différents types de sièges et différents profils d'occupant..

L'élément de connexion 1 proposé par l'invention permet ainsi d'obtenir une plus grande variété de réponses en déformation de l'élément de connexion 1, de sorte que l'élément de connexion 1 présente une plus grande adaptabilité et des performances de dissipation d'énergie améliorées en fonction de différentes variables telles que le type de force d'impact appliqué sur lui, le type de siège dans lequel il est implémenté et le profil de l'occupant du siège.

Selon une variante du premier mode de réalisation, le premier pontet 43 est formé par une partie du corps 4.

Selon une autre variante, le premier pontet 43 est un élément rapporté et fixé sur l'épaulement 30.

Selon encore une autre variante, le deuxième pontet 52 est formé par une partie du corps 4.

Selon une autre variante, le deuxième pontet 52 est un élément rapporté et fixé sur l'épaulement 30.

En variante, le deuxième pontet 52 est également incurvé.

Selon une autre variante, la largeur de fente l2 moyenne de la deuxième fente traversante 50 est égale à la largeur de fente l1 moyenne de la première fente traversante 40.

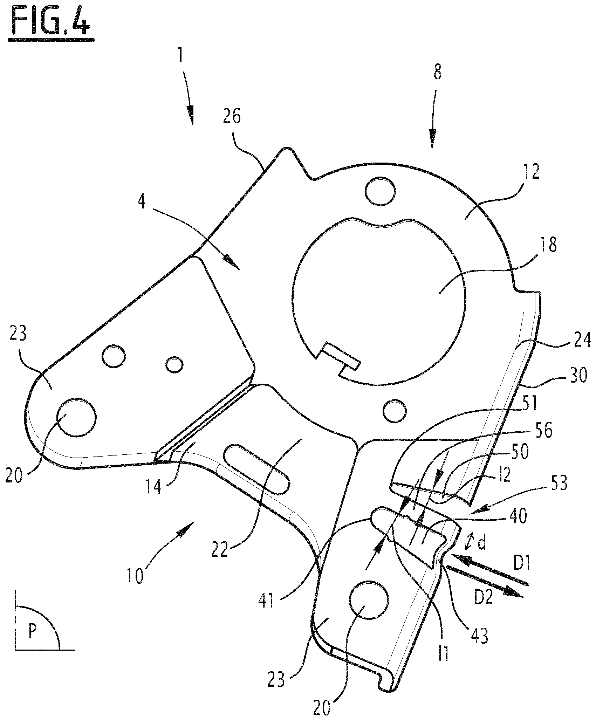

Selon un deuxième mode de réalisation illustré sur la figure 4, l'élément de connexion 1 ne comprend pas de deuxième pontet 52. L'épaulement 30 comprend une ouverture 53 s'étendant en regard de la deuxième fente traversante 50. En d'autres termes, l'épaulement 30 comprend un enlèvement de matière en regard de la deuxième fente traversante 50. L'épaulement 30 est ainsi discontinue le long du premier bord 24. L'épaulement 30 comprend donc deux portions d'épaulement séparées par l'ouverture 53. La deuxième fente traversante 50 est ainsi ouverte le long du premier bord 24.

La deuxième fente traversante 50 est alors moins résistante à une compression ou une traction résultante de la force d'impact et dirigée le long du premier bord 24 que la première fente traversante 40. Ainsi, avantageusement, lorsqu'une force d'impact s'applique sur le siège, l'élément de connexion 1 est déformé de sorte que la largeur de fente l2 de la deuxième fente traversante 50 est diminuée dans un premier temps, puis la largeur de fente l1 de la première fente traversante 40 est diminuée dans un deuxième temps.

L'installation d'un deuxième pontet 52 ou non représente un paramètre supplémentaire permettant de modifier la réponse en déformation de l'élément de connexion 1.

Selon un mode de réalisation non illustré, l'élément de connexion 1 ne comprend pas de premier pontet 43 ni de deuxième pontet 52. L'épaulement 30 comprend donc trois portions d'épaulement séparées par les deux ouvertures. La première et la deuxième fente traversante 40, 50 sont ainsi ouvertes le long du premier bord 24.Selon ce mode de réalisation, l'élément de connexion 1 comprend un corps 4 sur lequel un dossier 2 et une assise 3 du siège sont destinés à être montés. Le corps 4 définit un premier bord 24 et au moins une première fente traversante 40 s'étendant longitudinalement selon la première direction D1 depuis le premier bord 24 et définissant une première extrémité intérieure 41. L'élément de connexion 1 comprend, en outre, au moins une deuxième fente traversante 50 s'étendant longitudinalement depuis le premier bord 24 et définissant une deuxième extrémité intérieure 51. La première fente traversante 40 et la deuxième fente traversante 50 sont séparées par la bande de matériau 56.

## Revendications

1. Elément de connexion (1) d'un siège de véhicule comprenant un corps (4) sur lequel un dossier (2) et une assise (3) du siège sont destinés à être montés,
le corps (4) définissant un premier bord (24) et au moins une première fente traversante (40) s'étendant longitudinalement selon une première direction (D1) depuis le premier bord (24) et définissant une première extrémité intérieure (41),
l'élément de connexion (1) comprenant en outre un premier pontet (43) s'étendant le long d'au moins une partie du premier bord (24) en regard de la première fente (40), le premier pontet (43) présentant une forme incurvée,
**caractérisé en ce que** le premier pontet (43) ferme la première fente traversante (40) et **en ce que** le premier pontet (43) constitue une extrémité de la première fente traversante (40) opposée à la première extrémité inférieure (41).

2. Elément de connexion (1) selon la revendication 1, dans lequel le corps (4) définit au moins une deuxième fente traversante (50) s'étendant depuis le premier bord (24) du corps (4) et définissant une deuxième extrémité intérieure (51),
la première fente traversante (40) et la deuxième fente traversante (50) étant séparées par une bande de matériau (56).

3. Elément de connexion (1) selon la revendication 2, dans lequel la deuxième fente traversante (50) s'étend sensiblement parallèlement à la première direction (D1).

4. Elément de connexion (1) selon la revendication 2 ou 3, comprenant, en outre, un deuxième pontet (52) s'étendant le long d'au moins une partie du premier bord (24) en regard de la deuxième fente (50).

5. Elément de connexion (1) selon la revendication 4, dans lequel le deuxième pontet (52) présente une forme rectiligne.

6. Elément de connexion (1) selon la revendication 2 ou 3, dans laquelle la deuxième fente traversante (50) est ouverte le long du premier bord (24).

7. Elément de connexion (1) selon l'une quelconque des revendications 2 à 6, dans lequel la bande de matériau (56) présente une largeur de bande (d), prise le long du premier bord (24), comprise entre 1 mm et 10 mm, de préférence entre 3 mm et 5 mm.

8. Elément de connexion selon l'une quelconque des revendications 2 à 7, dans lequel la première extrémité intérieure (41) de la première fente (40) et la deuxième extrémité intérieure (51) de la deuxième fente (50) présentent chacune une forme arrondie.

9. Elément de connexion (1) selon l'une quelconque des revendications 2 à 8, dans lequel au moins l'une entre la première fente (40) et la deuxième fente (50) présente une forme évasée depuis respectivement la première extrémité intérieure (41) et/ou la deuxième extrémité intérieure (51) vers le premier bord (24).

10. Elément de connexion (1) selon l'une quelconque des revendications 2 à 9, dans lequel chacune des première et deuxième fentes (40, 50) présente :
- une longueur, mesurée selon la première direction (D1), comprise entre 5 mm et 30 mm, de préférence entre 10 mm et 20 mm, et
- une largeur de fente (l1, l2), mesurée selon une direction perpendiculaire à la première direction, comprise entre 1 mm et 20 mm.

11. Elément de connexion (1) selon la revendication 10, dans lequel la largeur de fente (l2) moyenne de la deuxième fente (50) est inférieure à la largeur de fente (l1) moyenne de la première fente (40).

12. Elément de connexion (1) selon la revendication 10 ou 11, dans lequel la largeur de fente (l2) de la deuxième fente (50), prise le long du premier bord (24), est inférieure à la largeur de fente (l1) de la première fente (40), prise le long du premier bord (24).

13. Elément de connexion (1) selon l'une quelconque des revendications 1 à 12, dans lequel la concavité du premier pontet (43) est dirigée selon une deuxième direction (D2) opposée à la première direction (D1) d'extension de la première fente (40).

14. Elément de connexion (1) selon l'une quelconque des revendications 1 à 13, comprenant, en outre, un épaulement (30) s'étendant le long du premier bord (24) sensiblement perpendiculairement audit premier bord (24), le premier pontet (43) étant formé par une partie de l'épaulement (30).

15. Siège de véhicule comprenant un dossier (2), une assise (3) et un élément de connexion (1) selon l'une quelconque des revendications 1 à 14, le dossier (2) et l'assise (3) étant destinés à être montés sur le corps (4) de l'élément de connexion (1).

## Patentansprüche

1. Verbindungselement (1) eines Fahrzeugsitzes, umfassend einen Körper (4), an dem eine Rückenlehne (2) und ein Sitzpolster (3) des Sitzes montiert werden sollen, wobei der Körper (4) eine erste Kante (24) und mindestens einen ersten Durchgangsschlitz (40) definiert, der sich in Längsrichtung in einer ersten Richtung (D1) von der ersten Kante (24) erstreckt und ein erstes inneres Ende (41) definiert,
wobei das Verbindungselement (1) außerdem eine erste Brücke (43) umfasst, die sich entlang zumindest eines Teils der ersten Kante (24) gegenüber dem ersten Schlitz (40) erstreckt, wobei die erste Brücke (43) eine gekrümmte Form aufweist,
**dadurch gekennzeichnet, dass** die erste Brücke (43) den ersten Durchgangsschlitz (40) verschließt und dass die erste Brücke (43) ein dem ersten unteren Ende (41) gegenüberliegendes Ende des ersten Durchgangsschlitzes (40) bildet.

2. Verbindungselement (1) gemäß Anspruch 1, wobei der Körper (4) mindestens einen zweiten Durchgangsschlitz (50) definiert, der sich von der ersten Kante (24) des Körpers (4) erstreckt und ein zweites inneres Ende (51) definiert,
wobei der erste Durchgangsschlitz (40) und der zweite Durchgangsschlitz (50) durch einen Materialstreifen (56) getrennt sind.

3. Verbindungselement (1) gemäß Anspruch 2, wobei der zweite Durchgangsschlitz (50) im Wesentlichen parallel zur ersten Richtung (D1) verläuft.

4. Verbindungselement (1) gemäß Anspruch 2 oder 3, außerdem eine zweite Brücke (52) umfassend, die sich entlang zumindest eines Teils der ersten Kante (24) gegenüber dem zweiten Schlitz (50) erstreckt.

5. Verbindungselement (1) gemäß Anspruch 4, wobei die zweite Brücke (52) eine geradlinige Form aufweist.

6. Verbindungselement (1) gemäß Anspruch 2 oder 3, wobei der zweite Durchgangsschlitz (50) entlang der ersten Kante (24) offen ist.

7. Verbindungselement (1) nach einem der Ansprüche 2 bis 6, wobei der Materialstreifen (56) eine Streifenbreite (d), gemessen entlang der ersten Kante (24), zwischen 1 mm und 10 mm, vorzugsweise zwischen 3 mm und 5 mm aufweist.

8. Verbindungselement nach einem der Ansprüche 2 bis 7, wobei das erste innere Ende (41) des ersten Schlitzes (40) und das zweite innere Ende (51) des zweiten Schlitzes (50) jeweils eine abgerundete Form aufweisen.

9. Das Verbindungselement (1) gemäß einem der Ansprüche 2 bis 8, wobei zumindest einer von dem ersten Schlitz (40) und dem zweiten Schlitz (50) eine sich vom ersten inneren Ende (41) und/oder vom zweiten inneren Ende (51) in Richtung der ersten Kante (24) konisch erweiternde Form aufweist.

10. Verbindungselement (1) gemäß einem der Ansprüche 2 bis 9, wobei jeder der ersten und zweiten Schlitze (40, 50) Folgendes aufweist:
- eine Länge, gemessen in der ersten Richtung (D1), zwischen 5 mm und 30 mm, vorzugsweise zwischen 10 mm und 20 mm, und
- eine Schlitzbreite (I1, l2), gemessen in einer Richtung senkrecht zur ersten Richtung, zwischen 1 mm und 20 mm.

11. Verbindungselement (1) nach Anspruch 10, wobei die durchschnittliche Schlitzbreite (l2) des zweiten Schlitzes (50) geringer ist als die durchschnittliche Schlitzbreite (11) des ersten Schlitzes (40).

12. Verbindungselement (1) nach Anspruch 10 oder 11, wobei die Schlitzbreite (l2) des zweiten Schlitzes (50), gemessen entlang der ersten Kante (24), geringer ist als die Schlitzbreite (l1) des ersten Schlitzes (40), gemessen entlang der ersten Kante (24).

13. Verbindungselement (1) nach einem der Ansprüche 1 bis 12, wobei die Konkavität der ersten Brücke (43) in eine zweite Richtung (D2) gerichtet ist, die der ersten Erstreckungsrichtung (D1) des ersten Schlitzes (40) entgegengesetzt ist.

14. Verbindungselement (1) nach einem der Ansprüche 1 bis 13, das außerdem eine Schulter (30) umfasst, die sich entlang der ersten Kante (24) im Wesentlichen senkrecht zu der ersten Kante (24) erstreckt, wobei die erste Brücke (43) durch einen Teil der Schulter (30) gebildet wird.

15. Fahrzeugsitz umfassend eine Rückenlehne (2), ein Sitzpolster (3) und ein Verbindungselement (1) gemäß einem der Ansprüche 1 bis 14, wobei die Rückenlehne (2) und das Sitzpolster (3) zur Montage am Körper (4) des Verbindungselements (1) bestimmt sind.

## Claims

1. A connection element (1) of a vehicle seat comprising a body (4) on which a backrest (2) and a seat cushion (3) of the seat are intended to be mounted, the body (4) defining a first edge (24) and at least one first through slot (40) extending longitudinally in a first direction (D1) from the first edge (24) and defining a first inner end (41),
the connection element (1) furthermore comprising a first bridge (43) extending along at least part of the first edge (24) opposite the first slot (40), the first bridge (43) having a curved shape,
**characterized in that** the first bridge (43) closes the first through slot (40) and **in that** the first bridge (43) forms one end of the first through slot (40) opposite the first lower end (41).

2. The connection element (1) according to claim 1, wherein the body (4) defines at least one second through slot (50) extending from the first edge (24) of the body (4) and defining a second inner end (51),
the first through slot (40) and the second through slot (50) being separated by a strip of material (56).

3. The connection element (1) according to claim 2, wherein the second through slot (50) extends substantially parallel to the first direction (D1).

4. The connection element (1) according to claim 2 or 3, furthermore comprising a second bridge (52) extending along at least part of the first edge (24) opposite the second slot (50).

5. The connection element (1) according to claim 4, wherein the second bridge (52) has a rectilinear shape.

6. The connection element (1) according to claim 2 or 3, wherein the second through slot (50) is open along the first edge (24).

7. The connection element (1) according to any one of claims 2 to 6, wherein the strip of material (56) has a strip width (d), taken along the first edge (24), of between 1 mm and 10 mm, preferably between 3 mm and 5 mm.

8. The connection element according to any one of claims 2 to 7, wherein the first inner end (41) of the first slot (40) and the second inner end (51) of the second slot (50) each have a rounded shape.

9. The connection element (1) according to any one of claims 2 to 8, wherein at least one of the first slot (40) and the second slot (50) has a flared shape from the first inner end (41) and/or the second inner end (51), respectively, toward the first edge (24).

10. The connection element (1) according to any one of claims 2 to 9, wherein each of the first and second slots (40, 50) has:
- a length, measured in the first direction (D1), of between 5 mm and 30 mm, preferably between 10 mm and 20 mm, and
- a slot width (l1, l2), measured in a direction perpendicular to the first direction, of between 1 mm and 20 mm.

11. The connection element (1) according to claim 10, wherein the average slot width (l2) of the second slot (50) is less than the average slot width (l1) of the first slot (40).

12. The connection element (1) according to claim 10 or 11, wherein the slot width (l2) of the second slot (50), taken along the first edge (24), is less than the slot width (l1) of the first slot (40), taken along the first edge (24).

13. The connection element (1) according to any one of claims 1 to 12, wherein the concavity of the first bridge (43) is directed in a second direction (D2) opposite the first direction (D1) of extension of the first slot (40).

14. The connection element (1) according to any one of claims 1 to 13, furthermore comprising a shoulder (30) extending along the first edge (24) substantially perpendicularly to said first edge (24), the first bridge (43) being formed by part of the shoulder (30).

15. A vehicle seat comprising a backrest (2), a seat cushion (3), and a connection element (1) according to any one of claims 1 to 14, the backrest (2) and the seat cushion (3) being intended to be mounted on the body (4) of the connection element (1).
